Europäisches Patentamt

(19) European Patent Office

Office européen des brevets

(11) Publication number: 0 267 291
A1

## (12) EUROPEAN PATENT APPLICATION

published in accordance with Art. 158(3) EPC

(21) Application number: 87902726.6

(22) Date of filing: 14.04.87

Data of the international application taken as a basis:

(86) International application number:
PCT/JP87/00235

(87) International publication number:
WO87/06722 (05.11.87 87/24)

(51) Int. Cl.³: G 03 B 27/72

(30) Priority: 23.04.86 JP 93890/86
19.02.87 JP 36031/87

(43) Date of publication of application:
18.05.88 Bulletin 88/20

(84) Designated Contracting States:
BE DE FR GB

(71) Applicant: POLAROID CORPORATION
549 Technology Square
Cambridge, Massachusetts 02139(US)

(72) Inventor: KATO, Eiichi Ricoh Company Ltd.
3-6, Nakamagome 1-chome
Ota-ku Tokyo 143(JP)

(72) Inventor: ISHIKAWA, Masahiro Ricoh Company Ltd.
3-6, Nakamagome 1-chome
Ota-ku Tokyo 143(JP)

(72) Inventor: ICHIMURA, Kajime Ricoh Company Ltd.
3-6, Nakamagome 1-chome
Ota-ku Tokyo 143(JP)

(74) Representative: Skone James, Robert Edmund et al,
GILL JENNINGS & EVERY 53-64 Chancery Lane
London WC2A 1HN(GB)

(54) FLASH EXPOSURE DEVICE.

(57) In a flash exposure device which includes a plurality of flash lamps (3, 4) which expose an original to light, detects quantity of light of said flash lamps by means of photosensors (8, 9; 8', 9'; 8", 9"; 16), and adjusts and controls the quantity of light of said flash lamps in response to the detected output of said photosensors; said sensors are located at nearly equal distances from respective flash lamp, and a control means is provided which turns on each of said flash lamps with the timing of flashing of each flash lamp shifted by a period of time longer than the duration of flashing thereof.

EP 0 267 291 A1

Croydon Printing Company Ltd.

./...

BAD ORIGINAL

FIG 3

FIG 3

- Lamp-on signal B
- Lamp-on signal A

100
Delay Circuit

OR 101

10
Main Control Part

11
Flash Lamp Drive Unit

Vcc
GND
A
B
S1
S2
S3
S4
VD
GND

8
3

4
9

Light-Quantity Setting Signal S4
Light-Quantity Setting Signal S3
Light-Quantity Setting Signal S2
Light-Quantity Setting Signal S1

0267291

SPECIFICATION

FLASH EXPOSURE DEVICE

## TECHNICAL FIELD

This invention relates to a flash exposure device for use in copying apparatus and also in slide film preparing apparatus and the like.

## BACKGROUND ART

There are various prior art methods for controlling lighting in a flash exposure device in which a plurality of flash lamps are provided for exposure of an original.

A first prior art method comprises disposing a photosensor in an optical path of an imaging optical system, for example, in the rear of a focusing lens and sensing the quantity of light directed from flash lamps by the photosensor in order to control lighting. However, in the case of such a method of lighting control, the quantity of light incident upon the photosensor tends to vary depending on the relative density of an original. Thus, when the original is blackish, a state of overexposure tends to occur, while when, on the contrary, the original is whitish, a state of under exposure tends to occur. In other words, proper lighting control cannot be attained.

In another prior art method proposed to obviate such defects, a plurality of photosensors are disposed near the surface of an original to be exposed to light directed from flash lamps, and the light emitted from the individual flash lamps is controlled on the basis of detection outputs of the individual photosensors. However, when all the flash lamps simultaneously emit light for the purpose of exposure in the case of this method, each photosensor may also receive incident light emitted from a flash lamp which does not correspond to that photosensor and which is not the object of lighting control by the photosensor. As a result, an unbalance occurs among the quantities of light emitted from the lamps, and a non-uniform distribution of illuminance appears on the surface of the original.

Further, there is another method which differs from the above-mentioned methods in that lighting control is carried out without the use of photosensors. For example, a discharging period is changed for the purpose of control, or a charging voltage is changed for the purpose of control, according to this method. However, in the case where the discharging period is changed for the purpose of control, it is difficult to control the quantity of light with high accuracy due to a variation of the capacitance of a capacitor or capacitors, a variation of the discharge characteristic of the circuit, etc. On the other hand, in the case where the charging voltage is changed for the purpose of control, the

- 2 -

discharge becomes impossible when the charging voltage is lower than a preset level, and this results in impossibility of providing a wide range of lighting control. (Usually, a lighting controllable range of, for example, 1 to 1/200 is required.)

With a view to obviate such prior out defects, it is an object of the present invention to provide a flash exposure device in which a photosensor can reliably control light emitted from a flash lamp without being affected by the relative density of an original to be exposed and without being affected by the quantity of flashlight directed from another flash lamp which is note the object of lighting control.

DISCLOSURE OF THE INVENTION

In order to attain the above object, a flash exposure device of the present invention comprises a plurality of flash lamps for exposing an original to light, photosensors detecting the quantity of light directed from the flash lamps, and means for controlling the quantity of light emitted from the flash lamps according to detection outputs of the photosensors, characterized in that the photosensors are disposed at positions substantially equidistant from the flash lamps, respectively, and control means is provided for energizing the flash lamps in a relation in which the light emission timings of the individual flash lamps are successively staggered by more than their duration of light emission.

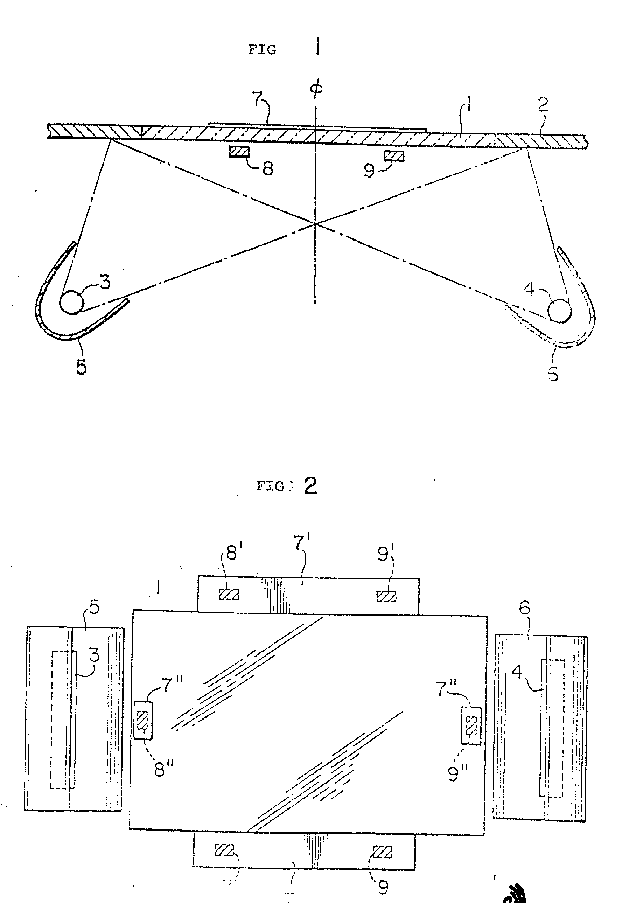

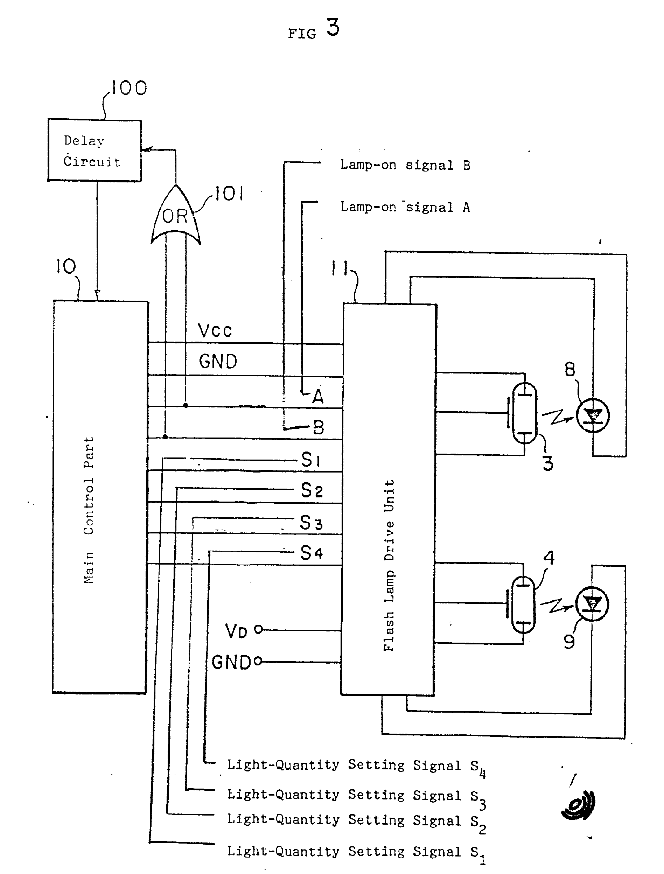

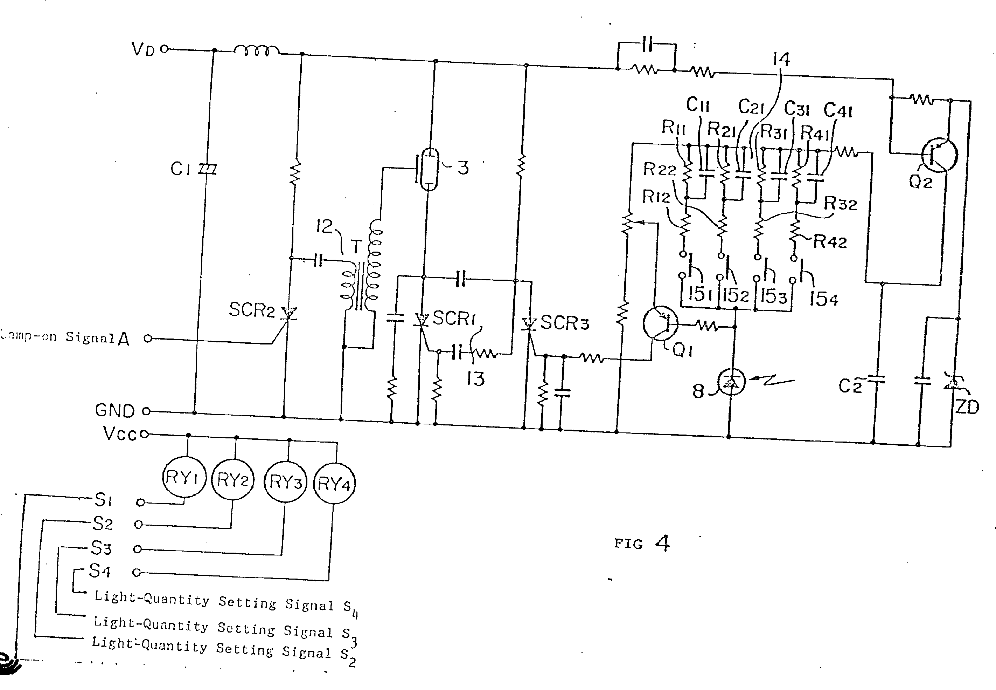

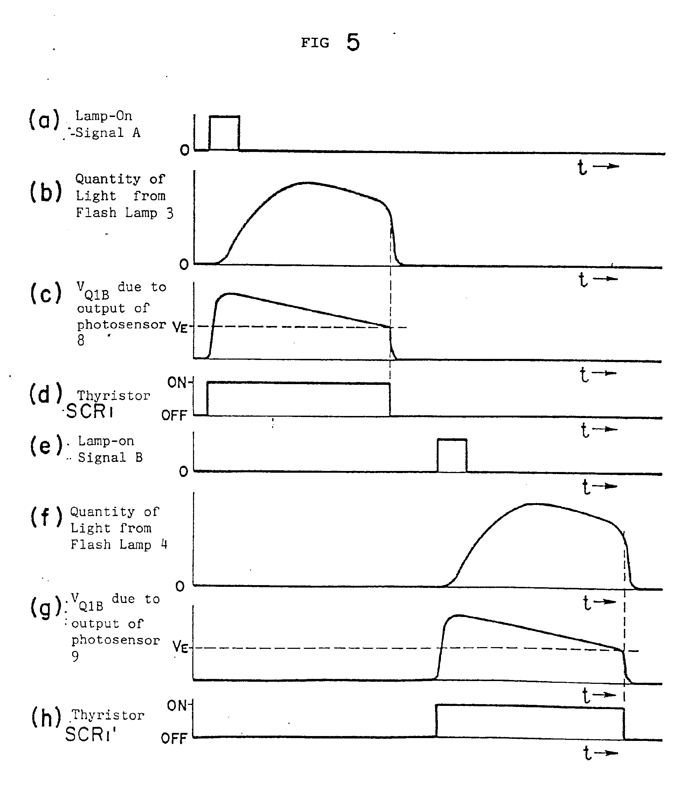

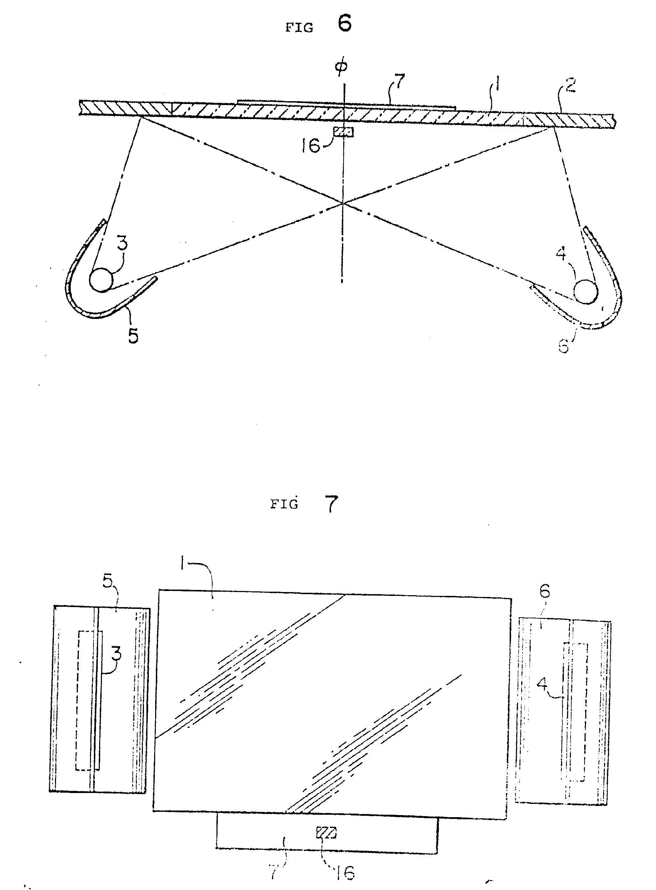

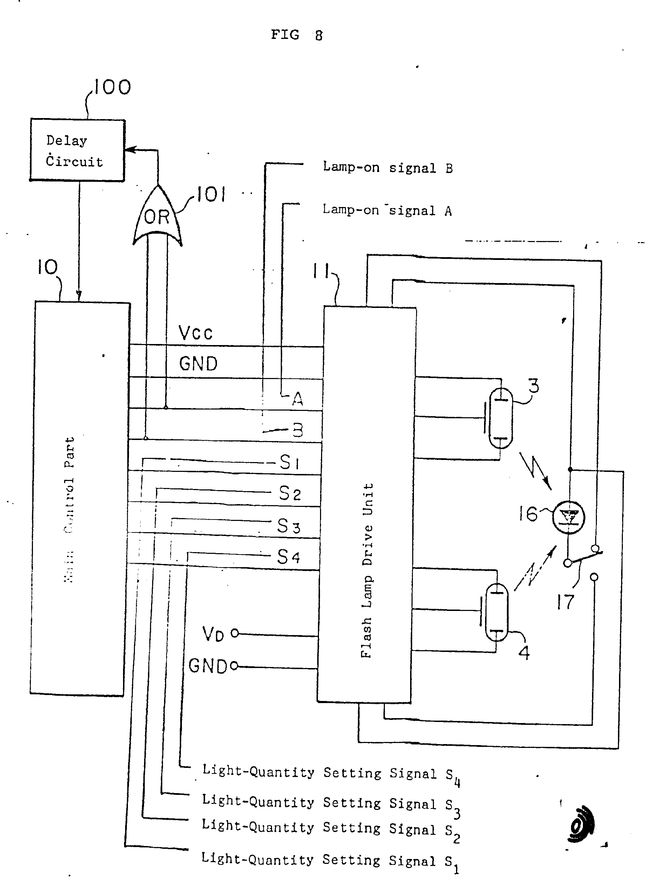

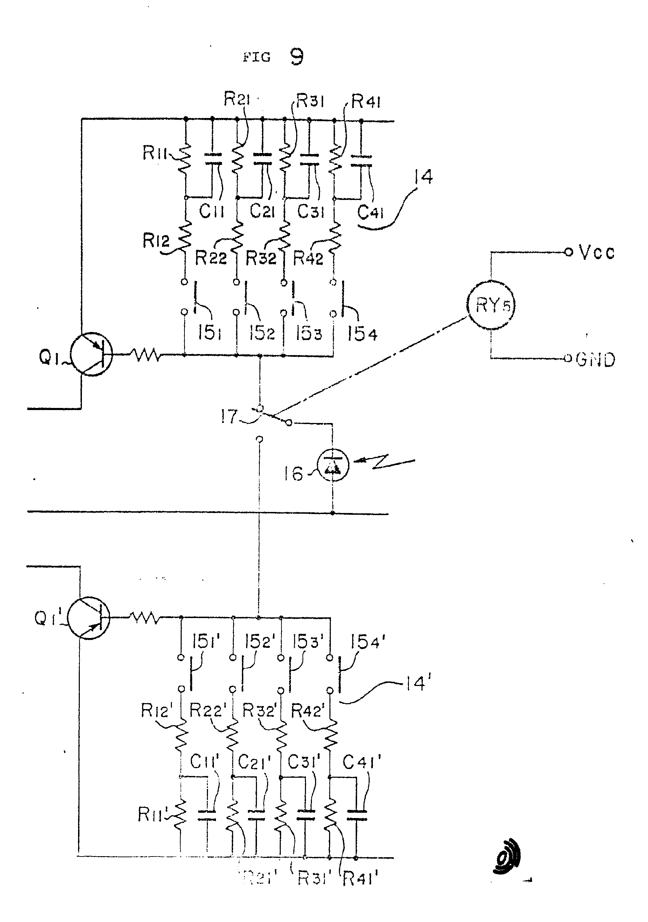

Fig. 1 is a vertical sectional, front elevation view showing a first embodiment of the present invention, Fig. 2 is a plan view of Fig. 1, Fig. 3 is a block diagram, Fig. 4 is a circuit diagram of a lamp drive circuit, Fig. 5 is a timing chart, Fig. 6 is a vertical sectional, front elevation view showing a second embodiment of the present invention, Fig. 7 is a plan view of Fig. 6, Fig. 8 is a block diagram and Fig. 9 is a partial circuit diagram of lamp drive circuits.

BEST MODE FOR CARRYING OUT THE INVENTION

A first embodiment of the present invention will now be described with reference to Figs. 1 to 5. First, a contact glass 1, which provides an original exposure part on which an original to be copied is set, is supported by a body cover 2. Within the body thus surrounded by the body cover 2 and contact glass 1, a plurality of, for example, two flash lamps 3 and 4 are located on the left-hand and right-hand sides respectively of the contact glass 1. These flash lamps 3 and 4 are disposed within respective reflectors 5 and 6 having a predetermined cured shape, so that the entire surface of the contact glass 1 can be exposed to beams of flashlight directed from the flash lamps 3 and 4. The flash lamps 3, 4 and the reflectors 5, 6 are disposed in line symmetry with respect to the centerline $\phi$ of the contact glass 1, so that the quantity of light is substantially

- 4 -

uniformly distributed on the contact glass 1.

On one side or both sides of the contact glass 1 in the transverse direction of the contact glass 1, a reference reflection sheet 7 having a predetermined density is located at a position where it can receive beams of flashlight directed from the flash lamps 3 and 4. Practically, this reference reflection sheet 7 is almost black in color. Photosensors for detecting and controlling the quantity of light emitted from the flash lamps are disposed beneath the reference reflection sheet 7. In this embodiment, photo diodes are used as photosensors 8 and 9 associated with the flash lamps 3 and 4 respectively. During the exposure by the flash lamps 3 and 4, these photosensors 8 and 9 receive light reflected from the reference reflection sheet 7 thereby detecting the quantities of light directed from the respective flash lamps 3 and 4.

The arrangement of the photosensors 8 and 9 will now be explained. The photosensors 8 and 9 are disposed at positions substantially equidistant from the centerline $\emptyset$, and, therefore, the photosensors 8 and 9 are disposed at positions equidistant from the respective flash lamps 3 and 4. More concretely, not only the photosensors 8 and 9 may be disposed in the same state as that shown in Fig. 2, that is, at the equidistant positions on the same side in the centerline symmetry relation, but also they may be disposed in symmetry with respect to the center point of the contact glass 1 as shown by the combination of reference numerals 8' and 9 or the combination of reference numerals 8 and 9', or they may be disposed in line symmetry relation on the other side as shown by the combination of reference numerals 8' and 9'. (A reference reflection sheet is designated by 7'.) Further, on the sides of the contact glass 1 where the flash lamps 3 and 4 are disposed, photosensors may be disposed in the same state at positions substantially equidistant from the longitudinal centers of these flash lamps 3 and 4 respectively, that is, at positions designated by reference numerals 8" and 9". (A reference reflection sheet is designated by 7".) However, in this embodiment, the combination of the photosensors 8 and 9 will be described. In the present embodiment, the reference reflection sheet 7 is provided as a reflecting member having a predetermined density at the position where it can receive beams of flashlight, and the photosensors 8 and 9 receive the beams of reflected light. However, the reflecting member such as the reference reflection sheet 7 may not be provided, and the photosensors 8 and 9 may directly receive the beams of flashlight. In such a case, a limiting aperture, a slit or a filter for attenuating light incident upon the photosensors 8 and 9 is preferably provided so that an excessively large quantity of light may not be incident upon the photosensors 8 and 9, and also a diffusion filter or the like is preferably provided so that the

- 6 -

distribution of the quantity of light incident upon the photosensors 8 and 9 can be made uniform. Thus, when the method using the reflecting member such as the reference reflection sheet 7 is employed, the quantity of light emitted from the flash lamps 3 and 4 would not be subject to variations attributable to secular attenuation of the quantity of light incident upon the photosensors due to fouling and discoloration of the reflecting member.

A schematic block diagram of a control system will next be described with reference to Fig. 3. A main control unit 10 is provided as control means controlling the energization and de-energization of the flash lamps 3 and 4. The flash lamps 3, 4 and the photosensors 8, 9 are connected to a flash lamp drive unit 11 as shown in Fig. 4. A lamp-drive power supply VD = DC 300 V is connected as an input to the flash lamp drive unit 11. Also, inputs applied from the main control part 10 to the flash lamp drive unit 11 include a lamp-ON signal A for triggering the flash lamp 3, a lamp-ON signal B for triggering the flash lamp 4, light-quantity setting signals $S_1$ to $S_4$ for setting controlled lighting levels, a power supply Vcc and ground GND. Detection outputs of the photosensors 8 and 9 are applied to the flash lamp drive unit 11.

Fig. 4 shows the structure of a drive circuit included in the flash lamp drive unit 11 for driving the flash lamp 3. A capacitor $C_1$ is connected between the lamp drive power supply VD and the ground GND, and a

BAD ORIGINAL

series circuit of the flash lamp 3 and a thyristor SCR1 is connected in parallel with the capacitor $C_1$. A trigger circuit 12 including a thyristor $SCR_2$ and a transformer T connected to the power supply circuit is disposed in a stage preceding the flash lamp 3, so that the flash lamp 3 is triggered by the lamp-ON signal A applied from the main control part 10. Further, a gate trigger circuit 13 including a plurality of resistors and capacitors is connected to the gate of the thyristor SCR1 connected in series with the flash lamp 3. A thyristor $SCR_3$, which acts to stop discharge for the purpose of light quantity control, is connected in parallel with this gate trigger circuit 13, so that the thyristor SCR1 can be switched over to its off state. The midpoint of an electrical connection between the photosensor 8 and a light-quantity control part 14 is connected through a transistor $Q_1$ to the gate of the thyristor $SCR_3$. This light-quantity control part 14 includes a plurality of resistors and capacitors constituting a plurality of resistor-capacitor groups having respectively different constants. More concretely, relay contacts $15_1$ to $15_4$ closed by relays $RY_1$ to $RY_4$ operating in response to the light-quantity setting signals $S_1$ to $S_4$ applied from the main control part 10 are arranged in parallel with one another. For example, resistors $R_{11}$ and $R_{12}$ are connected in series with the relay contact $15_1$, and a capacitor $C_{11}$ is connected in parallel with the resistor $R_{11}$. The same applies to the other relay contacts $15_2$ to

- 8 -

$15_4$. That is, a series-parallel circuit of resistors $R_{21}$, $R_{22}$ and a capacitor $C_{21}$, a series-parallel circuit of resistors $R_{31}$, $R_{32}$ and a capacitor C31, and a series-poarallel circuit of resistors $R_{41}$, $R_{42}$ and a capacitor $C_{41}$ are connected to the relay contacts $15_2$, $15_3$ and $15_4$ respectively. These series-parallel circuits of resistors and capacitors have respectively different constants. A capacitor $C_2$ is also connected together with a Zener diode ZD in the power supply line, and a transistor $Q_2$ is connected to the capacitor $C_2$ to control discharge of the capacitor $C_2$. This capacitor $C_2$ discharges its charge to the circuit of the photosensor 8.

The drive circuit for the other flash lamp 4 has a structure similar to that shown in Fig. 4.

The operation of the control system having such a structure will be described with reference to a timing chart shown in Fig. 5. When now the operator sets a required quantity of light on a control panel (not shown), one of the light-quantity setting signals $S_1$ to $S_4$ corresponding to the light-quantity setting is turned into its "L" level in the main control part 10 and is applied to the flash lamp drive unit 11, and one of the relays $RY_1$ to $RY_4$ corresponding to the selected one of the signals $S_1$ to $S_4$ is placed in its operating state. One of the relay contacts $15_1$ to $15_4$ corresponding to the operating one of the relays $RY_1$ to $RY_4$ is closed, and the corresponding one of the resistor-capacitor circuits in the light-quantity control part 14 is connected to the photosensor 8. (The same applies to the photosensor 9.)

Suppose, for example, that the light-quantity setting signal $S_2$ is applied. Then, the relay $RY_2$ is driven to close the relay contact $15_2$, and the circuit including the resistors $R_{21}$, $R_{22}$ and the capacitor $C_{21}$ is connected to the photosensor 8.

In the stand-by state, the capacitor $C_1$ is charged to 300 V by the lamp drive power supply $V_D$, while the thyristors $SCR_1$ to $SCR_3$ and the transistor $Q_2$ are in their off state. When, in such a state, the lamp-ON signal A of "H" level is applied from the main control part 10 to the gate of the thyristor $SCR_2$, this thyristor $SCR_2$ is turned on. As a result, the flash lamp 3 is triggered through the transformer T, and this flash lamp 3 starts to discharge. Consequently, the thyristor $SCR_1$ connected in series with the flash lamp 3 is also turned on. Also, since the energy charged in the capacitor $C_1$ is consumed due to the discharge of the flash lamp 3, the base voltage of the transistor $Q_2$ becomes lower than its emitter voltage, and, as a result, the transistor $Q_2$ is also turned on. Consequently, the charge stored in the capacitor $C_2$ is discharged into the circuit of the photosensor 8. The photosensor 8 receives light emitted from the flash lamp 3 and current flows in the photosensor 8. On the other hand, the transistor $Q_1$ is in its off state since its emitter voltage $V_e$ is

- 10 -

lower than its base voltge $V_B$. The base voltage $V_B$ decreases as the current flows through the photosensor 8. Thus, according to the circuit constant of the resistor-capacitor circuit connected to the photosensor 8, for example, the circuit including the resistors $R_{21}$, $R_{22}$ and the capacitor $C_{21}$, the quantity of light changes in an integrated form as shown in Fig. 5 (b). When finally the relation $V_E > V_B$ is reached in the transistor $Q_1$ due to the current flow through the photosensor 8, the transistor $Q_1$ is turned on. As a result, the thyristor $SCR_3$ is turned on by being gate-triggered, while the thyristor $Q_1$ is turned off to stop the discharge of the flash lamp. 3. The quantity of light emitted from the flash lamp 3 by the discharge is an integrated quantity of light determined by the circuit constant of the resistor-capacitor circuit connected to the photosensor 8, and the quantity of emitted light is controlled by changing the circuit constant of this resistor-capacitor circuit. (That is, by selection of one of the light-quantity setting signals $S_1$ to $S_4$, the corresponding one of the resistor-capacitor circuits having respectively different constants is selected for the purpose of lighting control.)

The lamp-ON signal A for the flash lamp 3 is applied through on OR circuit 101 to a known delay circuit 100 using an IC. The delay circuit 100 operates in response to this input signal, and its output signal is applied to the main control part 100 after lapse of a predetermined period of time longer than the discharge period of the flash lamp. In response to the application of this signal, the lamp-ON signal B for the flash lamp 4 is applied to the flash lamp drive unit 11 from the main control part 10, and the operation similar to that described in the case of the flash lamp 3 is repeated as shown in Figs. 5 (e) to 5 (h), so that the flash lamp 4 emits a controlled quantity of light. At the same time, the lamp-ON signal B for the flash lamp 4 is applied to the delay circuit 100, and a second output signal is applied with the predetermined delay time to the main control part 10 from the delay circuit 100. Application of this second signal completes one exposure cycle.

In the present embodiment, the delay circuit 100 using an IC is employed as control means for successively energizing the individual flash lamps in a relation staggered by more than their duration of light emission. However, it is apparent that a microcomputer may be provided in the main control part 10 to carry out similar control according to software. In Figs. 5 (e) to 5 (h), the same reference numeral with a dash is used to designate the circuit part which is associated with the flash lamp 4 and which corresponds to the circuit part associated with the flash lamp 3.

It will thus be seen that, in this embodiment, the flash lamps 3 and 4 are energized in such a relation that the light emission timing of the flash lamp 4 is staggered relative to that of the flash lamp 3 by more than the light emission duration of each flash lamp. The time difference between the light emission timings of the flash lamps 3 and 4 may be about 10 ms since the period of discharge is less than 5 ms. Therefore, even when such a time lag may be provided, the operator will recognize that both the flash lamps 3 and 4 emit flashlight at the same time.

Thus, according to the illustrated embodiment, the light emission timings of the plural flash lamps 3 and 4 are staggered relative to each other when the quantities of light emitted from the flash lamps 3 and 4 are detected by the photosensors 8 and 9 respectively. Therefore, in the case of detection of the quantity of light emitted from the flash lamp 3 by the photosensor 8, the detection is not adversely affected by the quantity of light emitted from the flash lamp 4 which is not the object of the detection. The same applies also to the inverse case. Further, the photosensors 8 and 9 do not receive the light reflected from the original, but receive the light reflected from the reference reflection sheet 7 disposed near the contact glass 1 (or the direct light from the flash lamps 3 and 4), thereby detecting the light quantity. Therefore, the light quantity is detected without being affected by the relative density of an original, etc. and the detected quantity of light is based to carry out the light quantity control. Also, since such photosensors 8 and 9 are disposed in a relation symmetrical with respect to and equidistant from the respective flash lamps 3 and 4, means for controlling a non-uniform illuminance distribution, etc. can be simplified. That is, when the photosensors 8 and 9 are disposed at positions random with respect to the flash lamps 3 and 4, it is necessary to carry out the control while taking the positional correspondence between the photosensors and the flash lamps into consideration, in order to obtain a predetermined quantity of light.

Next, a second embodiment of the present invention will be described with reference to Figs. 6 to 9. In Figs. 6 to 9, the same reference numerals are used to designate the same parts described in the first embodiment. In the present embodiment, a single photosensor 16 replaces the two photosensors detecting the quantities of light emitted from the two flash lamps 3 and 4 respectively. This photosensor 16 is disposed at a position equidistant from the flash lamps 3 and 4. More concretely, this photosensor 16 is disposed at a position equidistant from the flash lamps 3 and 4. More concretely, this photosensor 16 is located at a position on the centerline $\phi$ where it can receive light reflected from the reference reflection sheet 7 (or at a position where it can directly receives light emitted from the flash lamps 3 and 4). Further, because such a photosensor 16 is provided in common to the two flash lamps 3 and 4, the main control part 10 applies a lamp select signal to the flash lamp drive unit 11 for selecting one of the flash lamps 3 and 4 which emit beams of flashlight with the staggered timings, so that the photosensor 16 carries out its light quantity detecting operation for the selected one of the flash lamps 3 nd 4. A relay $RY_5$ driven by the lamp select signal is provided, and a relay contact 17 actuated by the relay $RY_5$ is provided to switch over the connection thereby connecting the photosensor 16 to the flash lamp 3 or flash lamp 4.

In the circuit shown in Fig. 9, the circuit parts associated with the flash lamp 4 are designated by the same reference numerals as those designating the circuit parts associated with the flash lamp 3, and a dash is affixed to the former reference numerals.

In the present embodiment, the operation control is such that the relay contact 17 is urged by the relay $RY_5$ to the position shown in Figs. 8 and 9 at the timing of energizing the flash lamp 3, so that the photosensor 16 associated now with the flash lamp 3 opeates in a manner similar to that described in the first embodiment. On the other hand, at the timing of energizing the flash lamp 4, the relay contact 17 is changed over to the other position where the photosensor 16 is associated with the flash lamp 4.

According to the present embodiment, the single photosensor 16 can control the quantities of light emitted from the two flash lamps 3 and 4 respectively. Therefore, not only the circuit layout can be simplified, but also any difference between the lamp lighting control charactersitics, which difference is attributable to variations of the sensor characteristics occurring as when a plurality of photosensors are used, can be cancelled, so that the two flash lamps 3 and 4 can be controlled under the same lighting control characteristic. Thus, a satisfactory balance is provided between the controlled quantities of light emitted from the respective flash lamps.

Further, even when, for example, two photosensors 8 and 9 are used as in the case of the first embodiment, they may be substantially juxtaposed on the centerline $\phi$ as in the case of Fig. 6.

INDUSTRIAL APPLICABILITY

It will be understood from the foregoing description of the present invention that flash lamps are energized with staggered timings of light emission, and associated photosensors detect quantities of light emitted from these flash lamps respectively. Therefore, each photosensor detects the quantity of light directed from the associated flash lamp without being affected by the quantity of light directed from the flash lamp which is not the object of detection. Also, since the phgotosensors detect light without being affected by the density of an original, a stabilized light quantity control for lighting adjustment can be attained.

CLAIM:

A flash exposure device comprising a plurality of flash lamps for exposing an original to light, photosensors detecting the quantity of light directed from said flash lamps, and means for controlling the quantity of light emitted from said flash lamps according to detection outputs of said photosensors, characterized in that said photosensors are disposed at positions substantially equidistant from said flash lamps respectively, and control means is provided for energizing said flash lamps in a relation in which the light emission timings of the individual flash lamps are successively staggered by more than their duration of light emission.

FIG 1

FIG 2

FIG 3

0267291

Delay Circuit — 100

OR — 101

Main Control Part — 10

Flash Lamp Drive Unit — 11

Lamp-on signal B

Lamp-on signal A

Vcc

GND

A

B

$S_1$

$S_2$

$S_3$

$S_4$

$V_D$

GND

3

8

4

9

Light-Quantity Setting Signal $S_4$

Light-Quantity Setting Signal $S_3$

Light-Quantity Setting Signal $S_2$

Light-Quantity Setting Signal $S_1$

FIG 4

FIG 5

(a) Lamp-On -Signal A

(b) Quantity of Light from Flash Lamp 3

(c) $V_{Q1B}$ due to output of photosensor 8

(d) Thyristor SCR1

(e) Lamp-on Signal B

(f) Quantity of Light from Flash Lamp 4

(g) $V_{Q1B}$ due to output of photosensor 9

(h) Thyristor SCR1'

FIG 6

FIG 7

FIG 8

FIG 9

0267291

# INTERNATIONAL SEARCH REPORT

International Application No PCT/JP87/00235

## I. CLASSIFICATION OF SUBJECT MATTER (if several classification symbols apply, indicate all) 3

According to International Patent Classification (IPC) or to both National Classification and IPC

Int.Cl⁴ G03B27/72

## II. FIELDS SEARCHED

Minimum Documentation Searched 4

| Classification System | Classification Symbols |
|---|---|
| IPC | G03B27/72, G03B27/54 |

Documentation Searched other than Minimum Documentation
to the Extent that such Documents are Included in the Fields Searched 5

| | |
|---|---|
| Jitsuyo Shinan Koho | 1923 – 1986 |
| Kokai Jitsuyo Shinan Koho | 1971 – 1986 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| A | JP, B, 45-5338 (Citizen Watch Co., Ltd.) 23 February 1970 (23. 02. 70) (Family: none) | 1 |
| A | JP, A, 55-11606 (Hitachi, Ltd.) 26 January 1980 (26. 01. 80) (Family: none) | 1 |
| A | US, A, 4,255,046 (Xerox Corp.) 10 March 1981 (10. 03. 81) (Family: none) | 1 |
| A | JP, A, 60-233634 (Fuji Xerox Co., Ltd.) 20 November 1985 (20. 11. 85) (Family: none) | 1 |

* Special categories of cited documents: 15
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance, the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search 2 | Date of Mailing of this International Search Report 2 |
|---|---|
| June 17, 1987 (17. 06. ) | July 6, 1987 (06. 07. 87) |
| International Searching Authority 1 | Signature of Authorized Officer 4 |
| Japanese Patent | |

Form PCT/ISA/210 (second sheet) (October...)

BAD ORIGINAL